# EUROPÄISCHE PATENTANMELDUNG

(11) **EP 3 154 116 A1**
(43) Veröffentlichungstag der Anmeldung: **12.04.2017**
(21) Anmeldenummer: 15189123.1
(22) Anmeldetag: 09.10.2015
(51) Int. Cl.: H01M 10/42, H01M 10/052, H01M 2/34, H01M 2/02

(54) **VORRICHTUNG ZUR ERHÖHUNG DER SICHERHEIT BEIM GEBRAUCH VON BATTERIESYSTEMEN**

(71) Anmelder: Lithium Energy and Power GmbH & Co. KG, 70469 Stuttgart (DE); Robert Bosch GmbH, 70442 Stuttgart (DE)
(72) Erfinder: Leuthner, Stephan, 71229 Leonberg (DE); Liebenow, Cornelius, 70372 Stuttgart (DE)

(57) **Zusammenfassung**

Die Erfindung geht aus von einer Batteriezelle (BZ) insbesondere von einer Lithium-Ionen-Batteriezelle, wobei die Batteriezelle (BZ) eine Anzahl von Berührungssensorelementen (S) zur Detektion von an den Berührungssensorelementen (S) anliegenden oder auf die Berührungssensorelemente (S) Druck ausübenden Elementen (N) aufweist, wobei die Berührungssensorelemente (S) voneinander elektrisch isoliert sind.

## Beschreibung

### Feld der Erfindung

Die vorliegende Erfindung bezieht sich auf eine Vorrichtung und auf eine Batteriezelle, insbesondere eine Lithium-Ionen-Batteriezelle, und auf die Verwendung einer Batteriezelle gemäß dem Oberbegriff der unabhängigen Patentansprüche.

### Stand der Technik

Bei einem Defekt oder bei einer unsachgemäßen Handhabung einer Batteriezelle kann es bei der Batteriezelle zur Gasbildung im Inneren der Batteriezelle kommen. Durch die Gasbildung entsteht ein Überdruck. Es ist bekannt, ein Überdruckventil oder eine Berstmembran in einem Gehäuse der Batteriezelle vorzusehen, um die entstandenen Gase abzuführen und ein thermisches Durchgehen der Batteriezelle zu vermeiden.

Beispielsweise wird in der DE 10 2008 053 011 A1 eine galvanische Batteriezelle für einen Akkumulator offenbart, bei der eine Sensoreinrichtung vorgesehen ist, mit der ein unerwünschter Zustand der galvanischen Batteriezelle detektiert werden kann. Als geeignete Sensoreinrichtungen werden beispielsweise Temperaturmesseinrichtungen, Piezoelemente, Dehnmessstreifen oder andere Messeinrichtungen genannt. Diese anderen Messeinrichtungen dienen insbesondere dazu, Verformungen des Gehäuses zu detektieren, wenn beispielsweise innerhalb der Batteriezelle eine Gasbildung und eine damit verbundene Druckerhöhung auftreten.

Ferner wird in der DE 10 2011112 641 A1 ein Verfahren zum Prüfen einer Lithium-lonen-Batteriezelle hinsichtlich ihrer Funktionsfähigkeit offenbart, bei dem auf bestimmte Stellen eines Gehäuses der Batteriezelle geschlagen wird, wodurch Schall entsteht. Dieser Schall wird mit einem außerhalb der Batteriezelle angeordneten Mikrophon empfangen. Aus dem empfangenen Signal des Mikrophons wird auf den Zustand der Batteriezelle geschlossen.

Ferner wird in der US 2007/122691 A1 eine Batteriezelle offenbart, die mit einem piezoelektrischen Element in einem gemeinsamen Rahmen angeordnet ist. Das piezoelektrische Element ist zur Detektion von Anschwellungen der Batteriezelle aufgrund anormaler Operationen der Batteriezelle geeignet.

### Offenbarung der Erfindung

Die Erfindung geht aus von einer Batteriezelle, insbesondere einer Lithium-Ionen-Batteriezelle, wobei die Batteriezelle eine Anzahl von Berührungssensorelementen zur Detektion von an den Berührungssensorelementen anliegenden oder auf die Berührungssensorelemente Druck ausübenden Elementen aufweist.

Der Kern der Erfindung besteht darin, dass die Berührungssensorelemente voneinander elektrisch isoliert sind.

Durch den erfindungsgemäßen Umstand, dass die Berührungssensorelemente voneinander elektrisch isoliert sind, kann ein genauer Ort, an dem ein Element an einem Berührungssensorelement anliegt oder auf ein Berührungssensorelement Druck ausübt, bestimmt werden. Bei diesem an dem Berührungssensorelementen anliegenden oder auf die Berührungssensorelemente Druck ausübenden Elementen kann es sich beispielsweise um einen metallischen Gegenstand, insbesondere um einen Nagel, handeln. Der metallische Gegenstand ist dabei in der Lage, durch das Gehäuse der Batteriezelle hindurch in das Innere der Batteriezelle einzudringen. Der elektrisch leitfähige Gegenstand kann dabei durch sein Eindringen in die Batteriezelle einen sicherheitskritischen Zustand der Batteriezelle verursachen. Ein solcher sicherheitskritischer Zustand kann beispielsweise darin bestehen, dass es zu einem elektrischen Kurzschluss innerhalb der Batteriezelle kommt oder dass Substanzen aus der Batteriezelle unkontrolliert in die Umgebung der Batteriezelle gelangen können oder dass Substanzen in das Innere der Batteriezelle hineingelangen können.

Durch den Umstand, dass der Ort bekannt ist, an dem das Druck ausübende Element eine mechanische Deformation der Batteriezelle und insbesondere eine mechanische Deformation eines Gehäuses der Batteriezelle verursacht, können gezielt Maßnahmen eingeleitet werden.

Die gezielt eingeleiteten Maßnahmen sollen die Batteriezelle in einen sicheren Zustand überführen. Ein sicherer Zustand der Batteriezelle liegt dann vor, wenn eine Gefahr für Personen oder Gegenstände, die sich in der Umgebung einer Batteriezelle befinden, vermindert wird. Zur Überführung der Batteriezelle in einen sicheren Zustand kann beispielsweise eine Entladung der Batteriezelle oder eine elektrische Überbrückung der Batteriezelle vorgenommen werden. Ferner kann eine elektrische Überbrückung einzelner Komponenten der Batteriezelle vorgenommen werden. Bei den einzelnen Komponenten der Batteriezelle handelt es sich beispielswiese um einzelne Elektrodenwickel der Batteriezelle.

Ferner kann beispielsweise an dem Ort, an dem das Gehäuse der Batteriezelle und gegebenenfalls das Innere der Batteriezelle durch das Druck ausübende Element mechanisch deformiert und beschädigt worden ist, eine Reparaturmaßnahme durchgeführt werden.

Dadurch, dass der Ort, an dem die mechanische Deformation der Batteriezelle stattfindet, bekannt ist, kann somit die sicherheitsrelevante Maßnahme effizient eingeleitet und vollzogen werden.

Hintergrund der Erfindung ist die Erhöhung der Sicherheit im Umgang mit Batteriezellen und die Vermeidung eines Eintretens eines sicherheitskritischen Zustands der Batteriezelle, sowie die Verringerung von Auswirkungen eines sicherheitskritischen Zustands.

Ein sicherheitskritischer Zustand der Batteriezelle liegt beispielsweise dann vor, wenn die Batteriezelle beschädigt worden ist. Beispielsweise kann durch das Eindringen eines elektrisch leitfähigen Gegenstands in die Batteriezelle ein elektrischer Kurzschluss innerhalb der Batteriezelle hervorgerufen werden. Darüber hinaus kann es zu einem unerwünschten Austreten von Substanzen aus der Batteriezelle kommen. Der sicherheitskritische Zustand geht mit der Erhöhung der Wahrscheinlichkeit einer Schädigung von Personen oder Gegenständen, die sich um Umfeld der Batteriezelle befinden, einher.

Die Erfindung betrifft ferner die Verwendung einer Batteriezelle in einem Batteriesystem oder in einem Fahrzeug, insbesondere in einem Kraftfahrzeug.

Weitere vorteilhafte Ausführungsformen der Erfindung sind Gegenstand der Unteransprüche.

Gemäß einer vorzugsweisen Ausgestaltungsform der Erfindung ist zwischen einem Gehäuse der Batteriezelle und den Berührungssensorelementen eine Isolationsschicht angeordnet.

Durch den erfindungsgemäßen Umstand, dass zwischen einem Gehäuse der Batteriezelle und den Berührungssensorelementen eine Isolationsschicht angeordnet ist, können solche Berührungssensorelemente verwendet werden, die mit dem Gehäuse elektrisch leitfähig verbunden werden können. Dabei würde für den Fall, dass es sich bei dem Druck ausübenden Element um einen elektrisch leitfähigen Gegenstand handelt, eine elektrisch leitfähige Verbindung zwischen den Berührungssensorelementen und dem Gehäuse geschaffen werden, wenn das Druck ausübende Element durch die Isolationsschicht hindurch dringt und das Berührungssensorelement mit dem Gehäuse physisch verbindet.

Gemäß einer nächsten vorzugsweisen Ausgestaltungsform der Erfindung ist die Isolationsschicht aus Polyimiden und/oder Polyethylenterephthalat ausgebildet. Durch den erfindungsgemäßen Umstand, dass die Isolationsschicht aus Polyimiden und/oder Polyethylenterephthalat ausgebildet, wird eine isolationsschicht bereit gestellt, die besonders robust gegenüber mechanischen Belastungen ist, beständig gegenüber einem Elektrolyten ist und keine Lösungsmittelemissionen aufweist.

Gemäß einer nächsten vorzugsweisen Ausgestaltungsform der Erfindung weist die Isolationsschicht eine Dicke von 30 µm bis 120 µm, insbesondere 20 µm bis 120µm, vorzugsweise 10µm bis 120µm auf.

Gemäß einer nächsten vorzugsweisen Ausgestaltungsform der Erfindung sind die Berührungssensorelemente in einem Abstand von 2 mm bis 3 mm voneinander angeordnet.

Durch den erfindungsgemäßen Umstand, dass die Berührungssensorelemente in einem Abstand von 2 mm bis 3 mm voneinander angeordnet sind, kann der Ort, an dem das Element Druck auf die Batteriezelle ausübt, exakt bestimmt werden.

Gemäß einer nächsten vorzugsweisen Ausgestaltungsform der Erfindung sind die Berührungssensorelemente aus Nickel oder Kupfer oder Aluminium ausgebildet.

Durch den erfindungsgemäßen Umstand, dass die Berührungssensorelemente aus Nickel oder Kupfer ausgebildet sind, werden besonders sensitive Materialien bereitgestellt, die eine hohe elektrische Leitfähigkeit aufweisen. Dadurch, dass die Materialien eine hohe elektrische Leitfähigkeit aufweisen, können bereits kleine elektrische Ströme, die durch eine elektrische leitfähige Verbindung zwischen den Berührungssensorelementen und dem Gehäuse fließen, detektiert werden. Beispielhafte kleine elektrische Ströme, die detektiert werden können, liegen bei 1mA bis 10mA.

Gemäß einer nächsten vorzugsweisen Ausgestaltungsform der Erfindung sind die Berührungssensorelemente als Folien auf der Isolationsschicht angeordnet.

Durch den erfindungsgemäßen Umstand, dass die Berührungssensorelemente als Folien auf der Isolationsschicht angeordnet sind, können die Berührungssensorelemente platzsparend an verschiedenen Stellen der Batteriezelle eingesetzt werden. Eine Anordnung der Berührungssensorelemente in Form von Folien ist zu dem durch die mechanische Flexibilität der Folie gegenüber mechanischen Einwirkungen robust. Bei den mechanischen Einwirkungen kann es sich beispielsweise um Stöße handeln. Darüber hinaus lassen sich Folien aufwandsgering auf der Isolationsschicht anordnen und können bei Bedarf leicht ausgewechselt werden.

Gemäß einer nächsten vorzugsweisen Ausgestaltungsform der Erfindung sind die Berührungssensorelemente innerhalb oder außerhalb des Gehäuses angeordnet.

Durch den erfindungsgemäßen Umstand, dass die Berührungssensorelemente außerhalb des Gehäuses angeordnet sind, kann eine Detektion eines Druck ausübenden Elementes bereits zu einem solchen Zeitpunkt stattfinden, an dem das Druck ausübende Element zwar durch ein Durchdringen der Isolationsschicht das Berührungssensorelement mit dem Gehäuse elektrisch leitfähig verbunden hat, das Gehäuse selbst aber noch nicht durchdrungen hat. Dadurch können bereits Maßnahmen zu einem Zeitpunkt eingeleitet werden um die Batteriezelle in einen sicheren Zustand zu überführen, bevor es zu einer mechanischen Deformation des Gehäuses und damit verbundenen Beschädigung der Batteriezelle gekommen ist. Bei den sicherheitsrelevanten Maßnahmen kann es sich beispielsweise um eine vollständige Entladung der Batteriezelle handeln oder es kann sich um das Legen eines Strombypasses handeln.

Durch den erfindungsgemäßen Umstand, dass die Berührungssensorelemente innerhalb des Gehäuses angeordnet sind, sind die Berührungssensorelemente und die Isolationsschicht durch das Gehäuse selbst vor mechanischen Einflüssen und Verschmutzungen geschützt. Die Einsatzfähigkeit der Berührungssensorelemente und der Isolationsschicht wird dadurch weiter erhöht.

Gemäß einer nächsten vorzugsweisen Ausgestaltungsform der Erfindung sind die Berührungssensorelemente mit einer Auswerteelektronik und/oder mit einer Sicherheitseinheit zum Einleiten sicherheitsrelevanter Aktionen verbunden. Mittels der Auswerteelektronik können die durch das Berührungssensorelement erzeugten Signale ausgewertet und weiterverarbeitet werden. Über die Auswerteelektronik kann insbesondere die Sicherheitseinheit angesteuert werden. Alternativ kann die Sicherheitseinheit direkt die durch das Berührungssensorelement erzeugten Signale auswerten und weiter verarbeiten. Die Sicherheitseinheit kann beispielsweise das Legen eines Strombypasses oder die vollständige Entladung der Batteriezelle bewirken.

### Kurze Beschreibung der Figuren

Nachfolgend wird die Erfindung anhang von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Figuren dargestellt.

Es zeigt:
- Figur 1: eine schematische Darstellung einer erfindungsgemäßen Batteriezelle gemäß einer ersten Ausführungsform;
- Figur 2: eine schematische Darstellung einer erfindungsgemäßen Batteriezelle gemäß einer zweiten Ausführungsform.

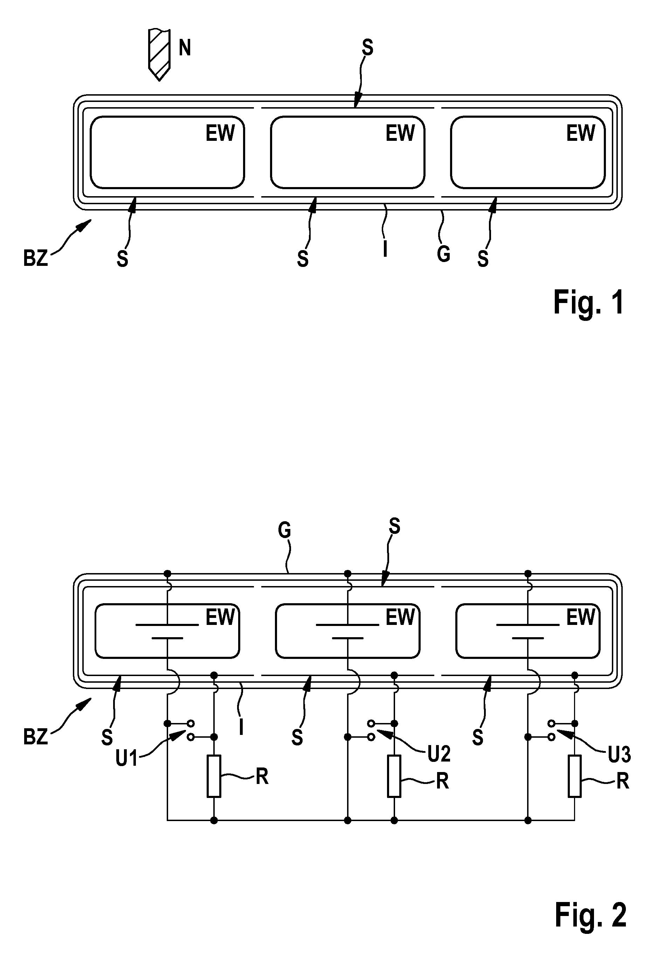

In Figur 1 ist eine erfindungsgemäße Batteriezelle gemäß einer ersten Ausführungsform schematisch dargestellt. Die Batteriezelle wird mit BZ bezeichnet. Bei der Batteriezelle BZ kann es sich insbesondere um eine Lithium-Ionen-Batteriezelle handeln. Mit S werden Berührungssensorelemente bezeichnet, wobei die Berührungssensorelemente S zur Detektion von an den Berührungssensorelementen S anliegenden oder auf die Berührungssensorelemente S Druck ausübenden Elementen geeignet ist.

Zwischen den Berührungssensorelementen S und dem Gehäuse G ist eine elektrisch isolierende Isolationsschicht angeordnet. Die elektrische isolierende Isolationsschicht wird mit I bezeichnet.

Bei den Berührungssensorelementen S kann es sich insbesondere um einen elektrisch leitfähigen Gegenstand handeln, der mit einem elektrisch leitfähigen Gehäuse, mit G bezeichnet, über einen elektrisch leitfähigen eindringenden Gegenstand elektrisch verbunden werden kann. Der elektrisch leitfähige eindringende Gegenstand wird mit N bezeichnet. Bei dem elektrisch leitfähigen und das Gehäuse G durchdringenden Gegenstand N kann es sich insbesondere um einen Nagel oder um einen anderen metallischen Gegenstand handeln, der in der Lage ist, das Gehäuse G und die Isolationsschicht I zu durchdringen und in die Batteriezelle BZ einzudringen.

Im Inneren der Batteriezelle BZ sind einzelne Elektrodenwickel angeordnet. Die einzelnen Elektrodenwickel werden mit EW bezeichnet.

Da die einzelnen Berührungssensorelemente S nicht elektrisch miteinander verbunden sind, sondern über eine individuelle Anbindung an eine elektronische Auswerteeinheit verfügen, kann bei einem Eindringen des elektrisch leitfähigen Gegenstands N in die Batteriezelle BZ ein bestimmtes Berührungssensorelement S elektrisch erkannt werden.

Hintergrund ist, dass eine elektrische Verbindung zwischen dem Gehäuse G und dem bestimmten Berührungssensorelement S genau an dem Ort geschaffen wird, an dem der elektrisch leitfähige Gegenstand N das Gehäuse G durchdringt. Anhand des bestimmten Berührungssensorelements S kann somit ermittelt werden, wo der elektrisch leitfähige Gegenstand N durch das Gehäuse G und die Isolationsschicht I bis hin zum Berührungssensorelement S durchgedrungen ist. Mittels einer Auswerteelektronik und/oder mit einer Sicherheitseinheit zum Einleiten sicherheitsrelevanter Aktionen können gezielt sicherheitsrelevante Maßnahmen an dem Ort des Gehäuses G eingeleitet werden, an dem das Gehäuse G beschädigt worden ist. An diesem Ort können somit beispielsweise zeitnah nach der Beschädigung des Gehäuses G Reparaturmaßnahmen eingeleitet werden. Ferner kann direkt bestimmt werden, welcher Elektrodenwickel EW durch den elektrisch leitfähigen Gegenstand N gegebenenfalls beschädigt worden ist.

In Figur 2 ist eine erfindungsgemäße Batteriezelle BZ gemäß einer zweiten Ausführungsform schematisch dargestellt. Mit G wird ein Gehäuse der Batteriezelle BZ bezeichnet. Mit I wird eine elektrisch isolierende Isolationsschicht der Batteriezelle BZ bezeichnet. Mit S werden Berührungssensorelemente bezeichnet, wobei die Berührungssensorelemente S zu Detektion von an den Berührungssensorelementen S anliegenden oder auf die Berührungssensorelemente S Druck ausübenden Elementen geeignet sind. Insbesondere sind die Berührungssensorelemente S zur Herstellung einer elektrisch leitfähigen Verbindung mit dem Gehäuse G über einen elektrisch leitfähigen Gegenstand geeignet. Bei dem weiteren elektrisch leitfähigen Gegenstand kann es sich beispielsweise um einen Nagel oder um einen anderen metallischen Gegenstand handeln.

In Figur 2 ist zudem eine mögliche elektrische Schaltung zur Bestimmung des Ortes dargestellt, an dem ein elektrisch leitfähiger Gegenstand eine elektrisch leitfähige Verbindung zwischen einem Berührungssensorelement S und dem Gehäuse G herbeigeführt hat.

Mit R werden ohmsche Widerstände bezeichnet. Gemäß dieser Ausführungsform ist das Gehäuse G mit einem positiven Pol eines Elektrodenwickels EW verbunden.

Die elektrische Verbindung zwischen den Berührungssensorelementen S und dem Gehäuse G ist hochohmig ausgelegt, so dass an den Spannungsabgriffen U1, U2 und U3 die reguläre elektrische Spannung der Batteriezelle BZ anliegt. Für den Fall, dass ein elektrisch leitfähiger Gegenstand ein Berührungssensorelement S mit dem Gehäuse G elektrisch leitfähig verbindet, wird ein niederohmiger Kontakt zwischen dem Berührungssensorelement S und dem Gehäuse G hergestellt. An dem entsprechenden Spannungsabgriff U1, U2 oder U3 liegt dadurch eine deutlich kleinere Spannung an, als an den beiden anderen Spannungsabgriffen. Dadurch, dass eine geringere Spannung an diesem Spannungsabgriff anliegt, kann mittels einer elektronischen Schaltung ermittelt werden, an welcher Stelle des Gehäuses G eine Durchdringung stattgefunden hat und welcher Elektrodenwickel EW von dieser Durchdringung möglicherweise betroffen ist und beschädigt wurde.

## Patentansprüche

1. Batteriezelle (BZ), insbesondere Lithium-Ionen-Batteriezelle, wobei die Batteriezelle (BZ) eine Anzahl von Berührungssensorelementen (S) zur Detektion von an den Berührungssensorelementen (S) anliegenden oder auf die Berührungssensorelemente (S) Druck ausübenden Elementen (N) aufweist, **dadurch gekennzeichnet, dass** die Berührungssensorelemente (S) voneinander elektrisch isoliert sind.

2. Batteriezelle (BZ) nach Anspruch 1, **dadurch gekennzeichnet, dass** zwischen einem Gehäuse (G) der Batteriezelle (BZ) und den Berührungssensorelementen (S) eine Isolationsschicht (I) angeordnet ist.

3. Batteriezelle (BZ) nach Anspruch 2, **dadurch gekennzeichnet, dass** die Isolationsschicht (I) aus Polyimiden und/oder Polyethylenterephthalat ausgebildet ist.

4. Batteriezelle (BZ) nach Anspruch 2 oder 3, **dadurch gekennzeichnet, dass** die Isolationsschicht (I) eine Dicke von 30 µm bis 120 µm aufweist, insbesondere 20µm bis 120µm aufweist, vorzugsweise 10µm bis 120µm aufweist.

5. Batteriezelle (BZ) nach einem der vorhergehenden Ansprüche, **dadurch gekennzeichnet, dass** die Berührungssensorelemente (S) in einem Abstand von 2 mm bis 3 mm voneinander angeordnet sind.

6. Batteriezelle (BZ) nach einem der vorhergehenden Ansprüche, **dadurch gekennzeichnet, dass** die Berührungssensorelemente (S) aus Nickel oder Kupfer oder Aluminium ausgebildet sind.

7. Batteriezelle (BZ) nach einem der Ansprüche 2 bis 6, **dadurch gekennzeichnet, dass** die Berührungssensorelemente (S) als Folien auf der Isolationsschicht (I) angeordnet sind.

8. Batteriezelle (BZ) nach einem der vorhergehenden Ansprüche, **dadurch gekennzeichnet, dass** die Berührungssensorelemente (S) innerhalb oder außerhalb des Gehäuses (G) angeordnet sind.

9. Batteriezelle (BZ) nach einem der vorhergehenden Ansprüche, **dadurch gekennzeichnet, dass** die Berührungssensorelemente (S) mit einer Auswerteelektronik und/oder mit einer Sicherheitseinheit zum Einleiten der sicherheitsrelevanten Aktionen verbunden sind.

10. Verwendung einer Batteriezelle (BZ) nach einem der vorhergehenden Ansprüche in einem Batteriesystem oder in einem Fahrzeug, insbesondere in einem Kraftfahrzeug.
